# EUROPÄISCHE PATENTSCHRIFT

(11) **EP 2 333 390 B1**
(45) Veröffentlichungstag und Bekanntmachung des Hinweises auf die Patenterteilung: **15.02.2012**
(21) Anmeldenummer: 09015383.4
(22) Anmeldetag: 11.12.2009
(51) Int. Cl.: F16K 35/04, G05G 5/16, G05G 5/22

(54) **Hydraulik-Schieberventil mit Positioniervorrichtung**
Hydraulic gate valve with positioning device
Soupape à tiroir hydraulique avec dispositif de positionnement

(43) Veröffentlichungstag der Anmeldung: 15.06.2011
(73) Patentinhaber: HAWE Hydraulik SE, 81673 München (DE)
(72) Erfinder: Heusser, Martin, 81245 München (DE); Poldinger, Josef, 85459 Berglern (DE)
(74) Vertreter: Grünecker, Kinkeldey, Stockmair & Schwanhäusser

(56) Entgegenhaltungen:
- DE-A1- 3 432 736
- DE-U1- 20 212 458
- US-A- 3 602 245
- US-A- 4 543 851
- US-A- 4 949 591

## Beschreibung

Die Erfindung betrifft ein Hydraulik-Schieberventil gemäß Oberbegriff des Patentanspruchs 1.

Bei einem aus DE 202 12 458 U bekannten Hydraulik-Schieberventil weist die Positioniervorrichtung eine mit dem Schieberkolben gekoppelte, linear verstellbare Hülse mit einem Außengewinde auf, sowie radial einwärts vorgespannte Rastkugeln zur Zusammenarbeit mit dem Außengewinde der Hülse. Die Hülse mit ihrem Außengewinde oder den Rillen und die federnd vorgespannten Rastkugeln bilden eine Reibungsbremse, deren Bremsmoment den Schieberkolben und aufgrund der Kopplung des Handhebels mit dem Schieber auch den Handhebel hemmt. Um zumindest eine vorgewählte Verstellposition des Schieberkolbens spürbar kenntlich zu machen, kann das Außengewinde der Hülse eine zusätzliche, mit den Gewindegängen verschnittene Vertiefung aufweisen. Die Rastkugeln sind bei einem Außengewinde mit Gewindesteigung in einer gemeinsamen Radialebene angeordnet. Sind hingegen nur zueinander parallele Rillen vorgesehen, dann werden die Rastkugeln gegenüber der Radialebene der Rillen schräg zueinander versetzt positioniert. Die Positioniervorrichtung mit der Reibungsbremse ist getrennt vom Handhebel in einem eigenen Gehäuse am Ventilgehäuse des Hydraulik-Schieberventils angeordnet.

Bei dem aus US 3 602 245 A bekannten Hydraulik-Schieberventil ist die Positioniervorrichtung in einem eigenen abgedichteten Gehäuse am dem Handhebel gegenüberliegenden Ende des Ventilgehäuses untergebracht. Radial einwärts vorgespannte Rastkugeln arbeiten mit Rastvertiefungen im Außenumfang einer mit dem Schieberkolben verbundenen, dessen lineare Verstellbewegungen mitmachenden Hülse zusammen. Der Handhebel ist in einem Hebelgehäuse an der Schwenkachse gelagert und greift mit einer Koppelung am verlängerten Ende des Schieberkolbens an.

Bei beiden bekannten Lösungen ist der die Haltekraft erzeugende Teil der Positioniervorrichtung baulich mit dem Schieberkolben vereinigt, damit dieser eine eingestellte Verstellposition nicht mehr selbsttätig verlässt, selbst wenn Strömungskräfte, Druckkräfte oder andere parasitäre Kräfte am Schieberkolben wirken, und solange nicht der Handhebel mit Absicht bewegt wird.

In einem im Internet unter www.sauer-danfoss aufrufbaren technischen Informationsblatt (Nr. 520L0344 · Rev FK · Oktober 2009) wird auf eine Reibraste PVMR für Proportional-Schieberventile des Typs PVG 32 hingewiesen. Diese Reibraste ist in einem zusätzlich am Ventilgehäuse dem Handhebel abgewandt montierbaren Gehäuse untergebracht, und enthält einen mit dem Schieberkolben verschraubten Stößel, der durch von außen radial angepresste, einstellbare Kugelverrastungen gehemmt wird, und den Schieberkolben in jeder Verstellposition festlegt.

Solche Positioniervorrichtungen sind speziell für Geräte zweckmäßig, bei denen eine manuell gewählte Verstellposition des Schieberkolbens so lange unverändert gehalten werden soll, bis eine andere Verstellposition, z.B. mittels des Handhebels, eingestellt wird. Dies ist beispielsweise bei Gesteinsbohrmaschinen der Fall, bei denen ein Arbeiter auch unter schlechten Sichtverhältnissen sicher sein muss, dass sich die gewählte Verstellposition und damit die Arbeitsgeschwindigkeit des Gerätes nicht verändert. Ferner ist es bei solchen Maschinen häufig zweckmäßig, wenn der zumindest mittels des Handhebels verstellbare Schieberkolben in zumindest einer ausgewählten, am Handhebel deutlich spürbaren Verstellposition positionierbar ist, und diese einhält, bis eine neuerliche Verstellung, z.B. am Handhebel, vorgenommen wird.

Bei einer aus US 4,543,851 A bekannten Positioniervorrichtung für ein Ventil ist die den Handhebel mit dem Ventil koppelnde Welle in einer in das Hebelgehäuse eingeschraubten Buchse drehbar gelagert. Die Welle weist einen Vierkantabschnitt auf, auf dem der Handhebel montiert ist, und auf dem zwischen der Buchse und einer Hebelgehäusewand eine Federanordnung aus Tellerfedern und außenseitigen Kreisringscheiben unter axialer Vorspannung durch die Tellerfedern montiert sind. Die Tellerfedern erzeugen die Vorspannkraft, die zwischen den relativ zueinander verdrehbaren Kreisringscheiben das Bremsmoment für die Welle generiert.

Bei einer aus US 4,949,591 A bekannten, mit Reibung arbeitenden Positioniervorrichtung für einen Drosselklappenzug eines Verbrennungsmotors ist in das Hebelgehäuse eine Handhebel-Reibungsbremse eingebaut, die mit einem eine zur Schwenkachse konzentrische Bremsfläche aufweisenden, stationären Bremskissen den Handhebel direkt mit einem Bremsmoment beaufschlagt, das durch ein an der Außenseite des Handhebels montiertes Wellfederelement und dessen axiale Vorspannung erzeugt wird. Am Handhebel ist ferner wenigstens ein Rastelement geformt, das mit einer in der Bremsfläche des Bremskissens geformten Rastkerbe zusammenwirkt, um zusätzlich eine vorbestimmte Verstellposition des Handhebels zu verrasten.

Bei einer aus DE 3 432 736 A bekannten, durch Reibschluss gehaltenen Stellvorrichtung für einen Zug oder eine Stange zur Übertragung einer Stellbewegung sind zwischen dem Handhebel und einer stationären Abstützung zwei beabstandete, parallele Schwenkachsen vorgesehen. Die eine Schwenkachse lagert den Handhebel schwenkbar an zwei Laschen, die einen Hebelträger zwischen sich einspannen, der mit dem Handhebel relativ zu den Laschen verschwenkbar ist. Die zwei Laschen sind um die andere Schwenkachse an der stationären Abstützung schwenkbar und daran gegen eine Schwenkbewegung durch Reibschluss gehemmt. Der Reibschluss wird von einer Tellerfederanordnung an der einen Schwenkachse erzeugt. Die Vorspannung der Tellerfedern kann durch einen Kugelmechanismus zwischen dem Hebelträger und einer der Laschen vorübergehend überwunden werden, um den Reibschluss der Laschen an der stationären Abstützung aufzuheben, damit nach einer anfänglichen Bewegung des Handhebels zur Betätigung des Kugelmechanismus der Handhebel zusammen mit den Laschen ungebremst an der stationären Abstützung verschwenkbar ist. Mit den Laschen ist der Zug oder die Stange zur Übertragung der Stellbewegung gekoppelt.

Der Erfindung liegt die Aufgabe zugrunde, ein Hydraulik-Schieberventil der eingangs genannten Art dahingehend zu verbessern, dass beliebige Verstellpositionen eines zumindest manuell verstellbaren Schieberkolbens auf baulich einfache und kostengünstige Weise haltbar sind.

Die gestellte Aufgabe wird mit den Merkmalen des Patentanspruchs 1 gelöst.

Bei dem Hydraulik-Schieberventil wird in Abkehr vom bekannten Prinzip, den Schieberkolben direkt zu hemmen, der Handhebel durch die Handhebel-Reibungsbremse mit einem gleichförmigen Bremsmoment beaufschlagt, das der Benutzer überwinden muss, um den Schieberkolben in eine neue Verstellposition zu bringen. Die Kopplung zwischen dem Handhebel und dem Schieberkolben ist so gestaltet, dass der Schieberkolben entweder stets der Handhebel-Bewegung folgt, z.B. durch Federbeaufschlagung oder hydraulische Beaufschlagung, oder mit dem Handhebel in beiden Verstellrichtungen gekoppelt ist, so dass der gebremste, nicht betätigte Handhebel den Schieberkolben festhält. Die Handhebel-Reibungsbremse ist baulich einfach und platzsparend in dem Bereich unterbringbar, in welchem der Handhebel am Ventilgehäuse montiert wird. Somit bleibt am Ventilgehäuse zusätzlicher Bauraum für andere Ausstattungskomponenten frei. Das Bremsmoment für den Handhebel kann nach Bedarf eingestellt werden, und entweder kontinuierlich wirken, oder mit spürbaren Rasten, oder kann in der einen oder anderen Bewegungsrichtung des Handhebels zu- oder abnehmen. Die Handhebel-Reibungsbremse ist funktionssicher, hat keinen nennenswerten Verschleiß, und wirkt weitestgehend unabhängig von Temperatur- und Erschütterungseinflüssen. Der Handhebel wird so gehemmt, dass er durch Erschütterungen oder vom Schieberkolben zurückwirkende Kräfte nicht selbsttätig bewegt wird, ist jedoch von Hand mit nur vertretbarem Kraftaufwand verstellbar. Da es bei Hydraulik-Schieberventilen zweckmäßig ist, zumindest eine ausgewählte Verstellposition vorzusehen, beispielsweise entsprechend der Nullstellung, deren Erreichen beim Bewegen des Handhebels deutlich spürbar sein soll, ist zur zusätzlichen Positionierung des Schieberkolbens in der wenigstens einen ausgewählten Verstellposition der Handhebel-Reibungsbremse funktionell eine Kugelverrastung zugeordnet. Die Kugelverrastung ist baulich mit der Handhebel-Reibungsbremse kombiniert und wirkt zwischen dem Handhebel und dem Hebelgehäuse. Die zusätzliche Positionieraufgabe der Kugelverrastung wird somit ohne Beanspruchung nennenswerten Bauraums realisiert, und derart, dass die Kugelverrastung und die Handhebel-Reibungsbremse ohne gegenseitige Beeinflussung zusammenarbeiten. Der Handhebel ist in einem am Ventilgehäuse angeordneten Hebelgehäuse vorgesehen und mit dem Schieberkolben gekoppelt. Die Handhebel-Reibungsbremse weist als Bremselement wenigstens ein Federelement auf. Als Bremselement kann eine Tellerfeder oder Tellerfeder-Paket vorgesehen sein, oder andere Federelemente wie Wellfedern, Ringfedern, Kunststofffedern, oder andere Federn. Das Bremselement ist in Richtung der Schwenkachse gegen eine Bremsfläche vorgespannt und erzeugt in Zusammenwirkung mit der Bremsfläche ohne zusätzliche Bauteile sowohl die Vorspannung als auch das Bremselement.

Zweckmäßig ist die baulich mit der Handhebel-Reibungsbremse kombinierte Kugelverrastung zur Schwenkachse konzentrisch und radial innerhalb und/oder außerhalb der Handhebel-Reibungsbremse angeordnet.

Der Handhebel ist mit der Schieberkolben über zumindest eine im Hebelgehäuse um die Schwenkachse verdrehbar gelagerte Welle gekoppelt, wobei die Handhebel-Reibungsbremse und die Kugelverrastung funktionell zwischen dem Hebelgehäuse und der Welle angeordnet sind. Eine Tellerfeder oder ein Tellerfeder-Paket als das Bremselement, in dem die Tellerfedern in Serie geschaltet sind, erzeugt eine sehr hohe und permanente Bremskraft, die sich außerdem sehr präzise einstellen lässt und verschleißunabhängig über lange Standzeiten wirksam bleibt. Die aus der Vorspannung des Bremselements resultierende Gegenkraft wird von der Welle am Hebelgehäuse abgestützt. Alternativ kann die Vorspannkraft auch auf andere Weise aufgenommen werden, ohne die Welle zu belasten.

In dem Hebelgehäuse kann eine nach außen abdichtbare Innenkammer vorgesehen sein, in der auf der Welle ein Schieberkolben-Betätiger angeordnet ist. Die Handhebel-Reibungsbremse und die Kugelverrastung sind an der Außenseite des Hebelgehäuses angeordnet, d. h. zweckmäßig außerhalb eines Bereiches, in dem Hydraulikmedium eindringt und/oder zumindest ein bestimmter Druck herrscht. Das Hebelgehäuse mit dem Handhebel und der Handhebel-Reibungsbremse zuzüglich der Kugelverrastung können eine vorfertigbare Baueinheit bilden, die zu unterschiedlichen Ventiltypen passt oder an solche einfach anpassbar ist. Mit der Baueinheit kann auch eine nachträgliche Umrüstung eines Hydraulik-Schieberventils vorgenommen werden.

Zweckmäßig ist das Bremselement auf der Welle in eine Fassung eines Hebelträgers eingesetzt. Dies ist beispielsweise ein konisch vertiefter Sitz, so dass vom Bremselement in Richtung der Schwenkachse des Handhebels möglichst wenig Bauraum beansprucht wird.

Zweckmäßig wird dabei die Welle entgegen der Vorspannung, mit der das Bremselement in Richtung der Schwenkachse gegen die Bremsfläche beispielsweise am Hebelgehäuse angepresst wird, gegenüber dem Hebelgehäuse abgestützt. Diese Lösung ist baulich einfach und funktionssicher, weil die Welle in ihrer Drehbewegung gebremst wird und gleichzeitig die Vorspannung überträgt. Das Bremselement könnte alternativ am Hebelgehäuse (z. B. versenkt) angeordnet sein und mit einer Bremsfläche am Hebelträger zusammenwirken.

Bei einer zweckmäßigen Ausführungsform ist auf einem aus dem Hebelgehäuse vorstehenden Ende der Welle eine sich am Hebelgehäuse abstützende Hülse montiert. Die Hülse kann mittels eines Sprengrings abnehmbar auf der Welle festgelegt sein, oder durch eine Schraubverbindung oder eine Madenschraube, oder dgl. Dies erleichtert die Montage und Demontage der Positioniervorrichtung des Hydraulik-Schieberventils. Eine Schraubverbindung erlaubt das Verändern der Vorspannung. Alternativ könnte die Handhebel-Reibungsbremse sogar im Inneren des Hebelgehäuses untergebracht werden.

Eine baulich einfache Ausführungsform der Kugelverrastung weist einen Hebelträger radial außerhalb der Handhebel-Reibungsbremse wenigstens eine federbelastete Rastkugel und wenigstens eine in der Außenseite des Hebelgehäuses angeordnete Rastvertiefung auf. Die Kugelverrastung könnte aber auch im Inneren des Hebelgehäuses und dort zwischen der Welle und dem Hebelgehäuse platziert werden. Die Unterbringung im Hebelträger und an der Außenseite des Hebelgehäuses ist herstellungs- und montagetechnisch gegebenenfalls günstiger.

Schließlich sind zwecks einfacher Montage und Demontage der Hebelträger und ein in einer Innenkammer des Hebelgehäuses angeordneter Schieberkolben-Betätiger jeweils mit einem Kerbstift an der Welle montiert.

Die Positioniervorrichtung, die als eine vorfertigbare Baueinheit an verschiedenen Hydraulik-Schieberventil-Typen montiert werden kann, ist so ausgelegt, dass der Handhebel mit einem Hebelträger auf einer in einem Hebelgehäuse drehgelagerten Welle montiert ist. Die Handhebel-Reibungsbremse ist auf der Welle und funktionell zwischen dem Hebelträger und dem Hebelgehäuse angeordnet. In diesem Bereich ist auch die Kugelverrastung untergebracht.

Die beiden Aufgaben, das Bremsmoment zu erzeugen und die Vorspannkraft für das Bremsmoment abzustützen, werden zweckmäßig so gelöst, dass die Hülse und das Bremselement in Bezug auf die Schwenkachse an voneinander abgewandten Außenseiten des Hebelgehäuses angeordnet sind. Dies bietet auch Vorteile dahingehend, dass gegebenenfalls das Hebelgehäuse eine Druckmittel enthaltende und/oder unter Druck setzbare Innenkammer besitzt und kein Druckmittel zur Handhebel-Reibungsbremse gelangen sollte. Alternativ könnte die Handhebel-Reibungsbremse jedoch sogar im Inneren des Hebelgehäuses untergebracht werden, wo dann auch die Vorspannung abgestützt werden kann, beispielsweise, falls der Innenraum des Hebelgehäuses kein Hydraulikdruckmittel enthält.

Anhand der Zeichnungen wird eine Ausführungsform des Erfindungsgegenstandes erläutert. Es zeigen:
- Fig. 1: eine Seitenansicht eines Hydraulik-Schieberventils mit einer Handhebel- Betätigung, teilweise im Schnitt,
- Fig. 2: eine Schnittdarstellung in der gleichen Blickrichtung wie in Fig. 1 des Hydrau- lik-Schieberventils mit einer montierten Positioniervorrichtung,
- Fig. 3: eine um 90° gegenüber Fig. 1 gedrehte Ansicht nur der Positioniervorrichtung, und
- Fig. 4: einen Schnitt in der Ebene IV- IV in Fig. 1, und in vergrößertem Maßstab der Positioniervorrichtung.

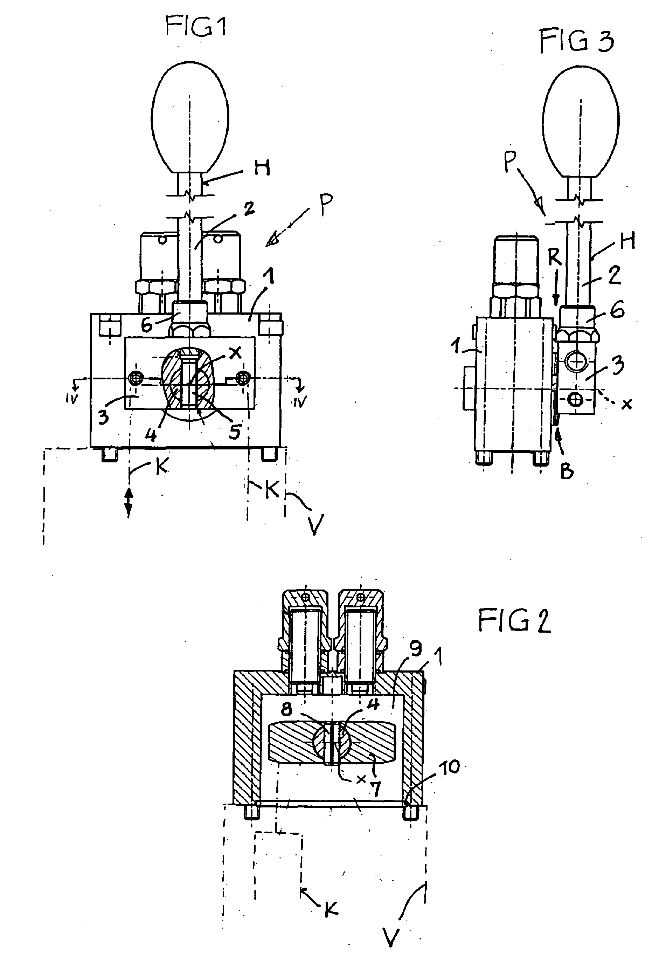

Fig. 1 verdeutlicht gestrichelt ein Hydraulik-Schieberventil V mit zumindest einem linear verstellbaren und in jeder Verstellposition festlegbaren Schieberkolben K oder einem anderen linear verstellbaren Ventilelement. Auf einem Gehäuse des Hydraulik-Schieberventils V ist eine Positioniervorrichtung P mit einer Handhebel-Betätigung für den jeweiligen Schieberkolben K montiert. Der Schieberkolben K wird linear verstellt, wenn ein Handhebel H um eine Schwenkachse X bewegt wird. Der Handhebel H ist an einem Hebelgehäuse 1 montiert, das auf dem Ventilgehäuse des Hydraulik-Schieberventils V angebracht ist und eine Welle 4 drehlagert, deren Achse mit der Schwenkachse X übereinstimmt. Der Handhebel H weist beispielsweise eine Hebelstange 2 auf, die mit einer Mutter 6 in einem Hebelträger 3 montiert ist, der auf einem vorstehenden Ende der Welle 4 mittels eines Kerbstiftes 5 an der Außenseite des Hebelgehäuses 1 fixiert ist.

In der zugehörigen Schnittansicht von Fig. 2 ist zu erkennen, dass an der Welle 4 in einer Innenkammer 9 des Hebelgehäuses 1 mittels eines Kerbstiftes 8 ein Schieberkolben-Betätiger 7 montiert ist, hier beispielsweise ein zweiarmiger Hebel zur wechselseitigen Betätigung beispielsweise zweier Schieberkolben. Der Schieberkolben-Betätiger 7 kann auch anders gestaltet sein, beispielsweise so, dass er in beiden Verstellrichtungen des Schieberkolbens mit diesem gekoppelt ist. In der in Fig. 2 gezeigten Ausführungsform wird z.B. vorausgesetzt, dass der Schieberkolben K stets in Anlage am Schieberkolben-Betätiger 7 bleibt, beispielsweise durch Federbeaufschlagung oder hydraulische Beaufschlagung oder dgl.. Der Schieberkolben K macht demzufolge jede Bewegung des Schieberkolben-Betätigers 7 mit und bleibt in der jeweiligen Verstellposition festgehalten, wenn der Schieberkolben-Betätiger 7 um die Schwenkachse X festgelegt ist. Die Innenkammer 9 wird beispielsweise durch eine Dichtung 10 nach außen abgedichtet.

Gemäß Fig. 3 ist der Hebelträger 3 einer Außenseite 16 des Hebelgehäuses 1 zugeordnet und ist hier im Bereich zwischen dem Hebelträger 3 und dem Hebelgehäuse 1 zumindest eine Handhebel-Reibungsbremse B vorgesehen, die den Handhebel H in jeder Position seines Bewegungsbereiches festlegt, solange nicht ein Bediener den Bremswiderstand oder das wirkende Bremsmoment mit Absicht überwindet.

Optional ist die Positioniervorrichtung P, speziell in Fig. 3, mit einer Kugelverrastung R ausgestattet, die es ermöglicht, den Handhebel H und somit den Schieberkolben K in zumindest einer ausgewählten Position zusätzlich zur Wirkung der Handhebel-Reibungsbremse B zu verrasten, derart, dass ein Bediener trotz der Bremsung am Handhebel H verspürt, wenn diese ausgewählte Position eingestellt worden ist.

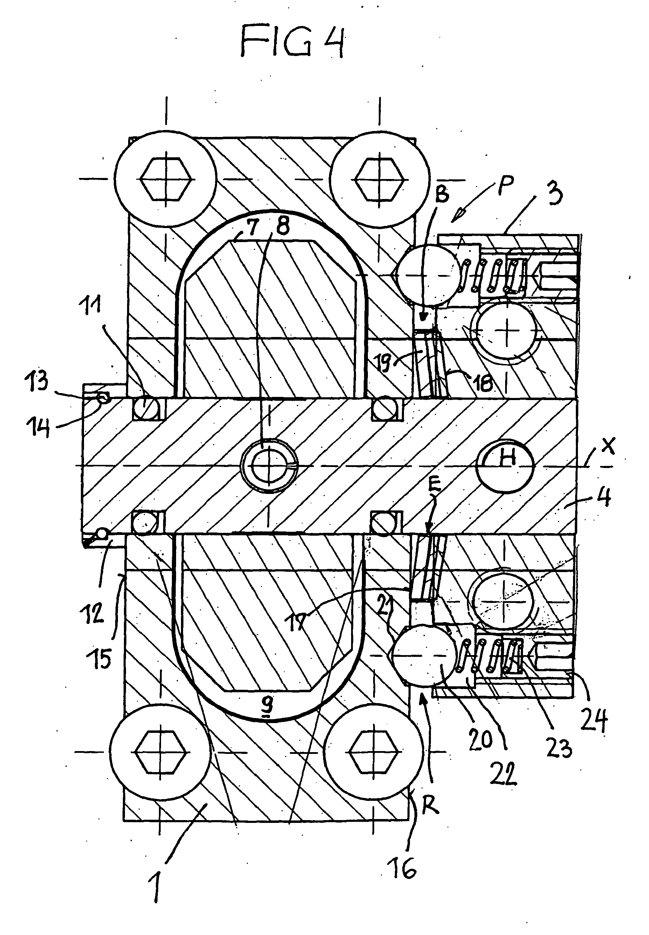

Die Positioniervorrichtung P wird im Detail anhand Fig. 4 erläutert. Die das Hebelgehäuse 1 durchsetzende Welle 4 steht mit beiden Enden über die voneinander abgewandten Außenseiten 15, 16 des Hebelgehäuses 1 vor, und ist in Bohrungen des Hebelgehäuses 1 beispielsweise durch O-Ringe 11 abgedichtet drehbar. Am in Fig. 4 linksseitigen, vorstehenden Ende der Welle 4 ist eine Hülse 12 montiert, die sich gegen die Außenseite 15 abstützt. Die Hülse 12 kann mittels eines Sprengringes 13 in einer Nut 14 auf der Welle 4 abnehmbar festgelegt sein. Die Hülse 12 überträgt eine in Richtung der Schwenkachse X wirkende Vorspannung für ein Bremselement E der Handhebel-Reibungsbremse B auf die Außenseite 15 des Hebelgehäuses 1.

Das Bremselement E der Handhebel-Reibungsbremse B ist in der gezeigten Ausführungsform eine Tellerfeder 19 bzw. ein Paket aus in Serie geschalteten Tellerfedern 19, eingesetzt in einen Sitz 18 im Hebelträger 3. Der Sitz 18 ist beispielsweise eine konische Vertiefung. Jede Tellerfeder 19 umgibt die Welle 4. Die der Außenseite 16 des Hebelgehäuses 1 zugewandte Tellerfeder 19 liegt an einer Bremsfläche 17 an, die entweder direkt von der Außenseite 16 gebildet oder in dieser vorgesehen ist. Der mittels des Kerbstiftes 5 (Fig. 1) auf der Welle 4 montierte Hebelträger 3 wird über die Hülse 12 so relativ zur Außenseite 16 des Hebelgehäuses 1 positioniert, dass das Bremselement E unter Vorspannung steht und, vorausgesetzt, dass die Bremsfläche 17 eben ist, ein gleichförmiges Bremsmoment um die Schwenkachse X erzeugt, das über den Hebelträger 3 den Handhebel H in der jeweiligen Position festlegt, und in der Folge über den Schieberkolben-Betätiger 7 auch den zugeordneten Schieberkolben K.

Anstelle einer oder mehrerer Tellerfedern 19 könnten auch Wellringe, Ringfedern, oder andere Federelemente, oder Kunststofffedern, gegebenenfalls sogar mit einem ringförmigen Bremskörper (nicht gezeigt) verwendet werden. Alternativ könnte die Hülse 12 oder ein technisch gleichwertiger Anschlag durch eine Schraubverbindung festgelegt sein, beispielsweise derart, dass die Vorspannung für das Bremselement E einstellbar oder verstellbar ist, um das Bremsmoment zu verändern.

Die optional zusätzlich vorgesehene Kugelverrastung R ist bei der gezeigten Ausführungsform konzentrisch zur Schwenkachse X und radial außerhalb der Handhebel-Reibungsbremse B vorgesehen. In zumindest einer Vertiefung 22 des Hebelträgers 3 ist eine Rastkugel 20 axial verschieblich angeordnet, die durch eine Feder 23 in eine in der Außenseite 16 vorgesehene Rastvertiefung 21 gedrückt wird. Die Feder 23 wird beispielsweise durch eine Schraube 24 im Hebelträger 3 abgestützt. In der in Fig. 4 gezeigten Betriebslage ist die Kugelverrastung R eingerastet. Wird der Handhebel H aus der in Fig. 4 gezeigten Position um die Schwenkachse X bewegt, dann tritt die zumindest eine Rastkugel 20 aus der Rastvertiefung 21 aus und wälzt sich an der ebenen Außenseite 16 ab, während die Handhebel-Reibungsbremse B weiterhin mit ihrem eingestellten Bremsmoment wirksam ist.

Bei einer alternativen, nicht gezeigten Ausführungsform könnten an beiden Enden der Welle 4 und außerhalb des Hebelgehäuses 1 Handhebel-Reibungsbremsen B angeordnet sein, deren in Richtung der Schwenkachse X wirkende Vorspannungen einander aufheben oder ausgleichen. Ferner könnte zumindest die Handhebel-Reibungsbremse B und/oder die Kugelverrastung R in der Innenkammer 9 des Hebelgehäuses 1 untergebracht sein. Obwohl dies nicht gezeigt ist, könnte der Schieberkolben K zusätzlich auch auf andere Weise als von Hand linear verstellt werden, ohne den Handhebel H zu benutzen, beispielsweise durch Magneten, eine Hydraulikvorsteuerung oder dgl..

## Patentansprüche

1. Hydraulik-Schieberventil (V), mit wenigstens einem in einem Ventilgehäuse zumindest manuell mittels eines um eine Schwenkachse (X) bewegbaren Handhebels (H) linear verstellbaren, mit dem Handhebel (H) gekoppelten Schieberkolben (K), und einer kraftschlüssigen Positioniervorrichtung (P) zum Festlegen des Schieberkolbens (K) in jeder verstellbaren Position über eine Reibungsbremse, wobei der Handhebel (H) an einem am Ventilgehäuse angeordneten Hebelgehäuse (1) angeordnet ist, **dadurch gekennzeichnet, dass** die Reibungsbremse eine Handhebel-Reibungsbremse (B) und zwischen dem Handhebel (H) und dem Hebelgehäuse (1) angeordnet ist, den Handhebel (H) gegenüber dem Hebelgehäuse (1) gegen selbsttätiges Bewegen um die Schwenkachse (X) zumindest unter einer vom Schieberkolben (K) zurückwirkenden Kraft mit einem Bremsmoment hemmend in jeder Verstellposition des Schieberkolbens (K) festlegt, dass die Handhebel-Reibungsbremse (B) als Bremselement (E), wenigstens ein in Richtung der Schwenkachse (X) gegen eine Bremsfläche (17) vorgespanntes Federelement aufweist und dass zur zusätzlichen Positionierung des Schieberkolbens (K) in wenigstens einer ausgewählten Verstellposition der Handhebel-Reibungsbremse (B) zwischen dem Handhebel (H) und dem Hebelgehäuse (1) funktionell eine Kugelverrastung (R) zugeordnet ist.

2. Hydraulik-Schieberventil nach Anspruch 1, **dadurch gekennzeichnet, dass** die Kugelverrastung (R) zur Schwenkachse (X) konzentrisch und radial innerhalb und/oder außerhalb der Handhebel-Reibungsbremse (B) angeordnet ist.

3. Hydraulik-Schieberventil nach Anspruch 1, **dadurch gekennzeichnet, dass** der Handhebel (H) mit dem Schieberkolben (K) über eine im Hebelgehäuse (1) um die Schwenkachse (X) verdrehbar gelagerte Welle (4) gekoppelt ist, und dass die Handhebel-Reibungsbremse (B) und die Kugelverrastung (R) funktionell zwischen dem Hebelgehäuse (1) und der Welle (4) angeordnet sind.

4. Hydraulik-Schieberventil nach Anspruch 3, **dadurch gekennzeichnet, dass** die Handhebel-Reibungsbremse (B) als Bremselement (E) wenigstens eine Tellerfeder (19), vorzugsweise ein Tellerfeder-Paket, aufweist, dass die Bremsfläche (17) außen am Hebelgehäuse (1) angeordnet ist, und dass die aus der Vorspannung des Bremselements (E) resultierende Gegenkraft von der Welle (4) am Hebelgehäuse (1) abgestützt wird.

5. Hydraulik-Schieberventil nach Anspruch 3, **dadurch gekennzeichnet, dass** das Hebelgehäuse (1) eine nach außen abgedichtete Innenkammer (9) aufweist, in der auf der Welle (4) ein Schieberkolben-Betätiger (7) angeordnet ist.

6. Hydraulik-Schieberventil nach Anspruch 3, **dadurch gekennzeichnet, dass** das Bremselement (E) auf der Welle (4) in eine Fassung (18), vorzugsweise einen konisch vertieften Sitz, eines Hebelträgers (3) eingesetzt ist.

7. Hydraulik-Schieberventil nach Anspruch 4, **dadurch gekennzeichnet, dass** auf einem aus dem Hebelgehäuse (1) vorstehenden Ende der Welle (4) eine sich am Hebelgehäuse (1) abstützende Hülse (12) montiert ist, vorzugsweise mittels eines Sprengringes (13) oder einer Schraubverbindung.

8. Hydraulik-Schieberventil nach Anspruch 1, **dadurch gekennzeichnet, dass** die Kugelverrastung (R) radial außerhalb der Handhebel-Reibungsbremse (B) wenigstens eine federbelastete Rastkugel (20) in einem Hebelträger (3) und wenigstens eine in der Außenseite (16) des Hebelgehäuses (1) angeordnete Rastvertiefung aufweist.

9. Hydraulik-Schieberventil nach wenigstens einem der vorhergehenden Ansprüche, **dadurch gekennzeichnet, dass** der Hebelträger (3) und der in der Innenkammer (9) des Hebelgehäuses (1) angeordnete Schieberkolben-Betätiger (7) mit Kerbstiften (5, 8) in der Welle (4) montiert sind.

## Claims

1. Hydraulic slider valve (V), comprising at least one slider piston (K) being linearly adjustable within a valve housing at least manually by means of a hand lever (H) which is movable about a pivot axis (K) and is coupled with the slider piston (K), and a force-fit positioning device (P) for securing the slider piston (K) in each adjustment position via a friction brake, wherein the hand lever (A) is arranged at a lever housing (1) provided at the valve housing, **characterised in that** the friction brake is a hand lever friction brake (B) and is arranged between the hand lever (H) and the lever housing (1), that the hand lever friction brake (B) is braking with a braking torque in each adjustment position of the slider piston (K) and fixes the hand lever (H) in relation to the lever housing (1) against arbitrary movements about the lever axis (X) at least in case of a force acting backwards from the slider piston (K), that the hand lever friction brake (B) comprises as a braking element (E) at least one spring element which is preloaded in the direction of the pivot axis (X) against a braking surface (17), and that for additionally positioning the slider piston (K) in at least one selected adjustment position a ball ratcheting mechanism (R) is functionally associated to the hand lever friction brake (B) and is arranged between the hand lever (H) and the lever housing (1).

2. Hydraulic slider valve according to claim 1, **characterised in that** the ball ratcheting mechanism (R) is concentric to the pivot axis (X) and is arranged radially inwards and/or outwards of the hand lever friction brake (B).

3. Hydraulic slider valve according to claim 1, **characterised in that** hand lever (H) is coupled with the slider piston (K) via a shaft (4) which is supported for rotation about the pivot axis (X) in the lever housing (1), and that the hand lever friction brake (B) and the ball ratcheting mechanism (R) are arranged functionally between the lever housing (1) and the shaft (4).

4. Hydraulic slider valve according to claim 3, **characterised in that** the hand lever friction brake (B) has at least one plate spring (19) as the braking element (E), preferably a package of plate springs, that the braking surface (19) is arranged exteriorly at the lever housing (1), and that a counter force resulting from the preload of the braking element (E) is backed-up by the shaft (4) at the lever housing (1).

5. Hydraulic slider valve according to claim 3, **characterised in that** the lever housing (1) comprises an interior chamber (9) which is sealed to the exterior, and that a slider piston actuator (7) is arranged in the interior chamber (9) on the shaft (4).

6. Hydraulic slider valve according to claim 3, **characterised in that** the braking element (E) is inserted on the shaft (4) into a socket (18), preferably into a conically depressed seat, of a lever carrier (3).

7. Hydraulic slider valve according to claim 4, **characterised in that** on an end of the shaft (4) protruding out of the lever housing (1) a collar (12) is mounted which abuts at the lever housing (1), and that the collar (12) is mounted, preferably, by means of a spring ring (13) or a threaded connection.

8. Hydraulic slider valve according to claim 1, **characterised in that** the ball ratcheting mechanism (R) comprises at least one spring loaded ball (20) in a lever carrier (3) radially outside of the hand lever friction brake (B) and at least one depression formed in the outer side (16) of the lever housing (1).

9. Hydraulic slider valve according to at least one of the preceding claims, **characterised in that** the lever carrier (3) and the slider piston actuator (7) arranged in the interior chamber (9) of the lever housing (1) are mounted in the shaft (4) with grooved dowel pins (5, 8).

## Revendications

1. Soupape à tiroir hydraulique (V), comprenant au moins un piston à coulisse (K) déplaçable linéairement dans un corps de soupape, au moins manuellement, au moyen d'un levier à main (H) mobile autour d'un axe de pivotement (X), et couplé au levier (H), et un dispositif de positionnement (P) par force de friction pour fixer le piston à coulisse (K) dans chaque position de déplacement par l'intermédiaire d'un frein à friction, le levier à main (H) étant monté sur un carter de levier (1) disposé sur le corps de soupape, **caractérisée en ce que** le frein à friction est un frein à friction (B) de levier à main et est disposé entre le levier à main (H) et le carter de levier (1), fixe par un couple de freinage, dans chaque position de déplacement du piston à coulisse (K), le levier à main (H) par rapport au carter de levier (1) contre un déplacement automatique autour de l'axe de pivotement (X), au moins sous l'effet d'une force de rétroaction du piston à coulisse (K), que le frein à friction (B) de levier à main présente, en tant qu'élément de freinage (E), au moins un élément à ressort précontraint en direction de l'axe de pivotement (X) contre une surface de freinage (17), et qu'un encliquetage à bille (R) est associé fonctionnellement, pour le positionnement supplémentaire du piston à coulisse (K) dans au moins une position de déplacement sélectionnée du frein à friction (B) de levier à main, entre le levier à main (H) et le carter de levier (1).

2. Soupape à tiroir hydraulique suivant la revendication 1, **caractérisée en ce que** l'encliquetage à bille (R) est disposé concentriquement à l'axe de pivotement (X) et dans la direction radiale à l'intérieur et/ou à l'extérieur du frein à friction (B) de levier à main.

3. Soupape à tiroir hydraulique suivant la revendication 1, **caractérisée en ce que** le levier à main (H) est couplé au piston à coulisse (K) par l'intermédiaire d'un arbre (4) monté tournant dans le carter de levier (1) autour de l'axe de pivotement (X), et que le frein à friction (B) de levier à main et l'accouplement à bille (R) sont disposés fonctionnellement entre le carter de levier (1) et l'arbre (4).

4. Soupape à tiroir hydraulique suivant la revendication 3, **caractérisée en ce que** le frein à friction (B) de levier à main présente, en tant qu'élément de freinage (E), au moins un ressort à disques (19), de préférence un paquet de ressorts à disques, que la surface de freinage (17) est disposée extérieurement sur le carter de levier (1), et que la force antagoniste, résultante de la précontrainte de l'élément de freinage (E), est supportée par l'arbre (4) sur le carter de levier (1).

5. Soupape à tiroir hydraulique suivant la revendication 3, **caractérisée en ce que** le carter de levier (1) présente un compartiment intérieur (9) rendu étanche vers l'extérieur, dans lequel est disposé sur l'arbre (4) un actionneur (7) de piston à coulisse.

6. Soupape à tiroir hydraulique suivant la revendication 3, **caractérisée en ce que** l'élément de freinage (E) est mis en place sur l'arbre (4) dans un châssis (18), de préférence un siège creusé en cône, d'un support de levier (3).

7. Soupape à tiroir hydraulique suivant la revendication 4, **caractérisée en ce qu'**un manchon (12), s'appuyant sur le carter de levier (1), est monté sur une extrémité de l'arbre (4) dépassant du carter de levier (1), de préférence au moyen d'un circlip (13) ou d'un vissage.

8. Soupape à tiroir hydraulique suivant la revendication 1, **caractérisée en ce que** l'encliquetage à bille (R) présente, dans la direction radiale extérieurement au frein à friction (B) de levier à main, au moins une bille d'encliquetage (20) à ressort dans un support de levier (3) et au moins un creux d'encliquetage, disposé dans le carter extérieur (16) du carter de levier (1).

9. Soupape à tiroir hydraulique suivant l'une au moins des revendications précédentes, **caractérisée en ce que** le support de levier (3) et l'actionneur (7) de piston à coulisse, disposé dans le compartiment intérieur (9) du carter de levier (1), sont montés dans l'arbre (4) par des goupilles élastiques fendues (5, 8).
